(19) Europäisches Patentamt / European Patent Office / Office européen des brevets

(11) **EP 3 279 691 B1**

(12) **EUROPEAN PATENT SPECIFICATION**

(45) Date of publication and mention
of the grant of the patent:
**26.05.2021 Bulletin 2021/21**

(51) Int Cl.:
**G01S 11/12** (2006.01)    **G01S 17/86** (2020.01)
**G01S 17/931** (2020.01)

(21) Application number: **17184039.0**

(22) Date of filing: **31.07.2017**

(54) **RANGEFINDER BASED ON PARALLAX CALCULATION**

ENTFERNUNGSMESSER BASIERT AUF PARALLAXENBERECHNUNG

SYSTÈME DE MESURE DE DISTANCE BASEÉ SUR CALCUL DE PARALLAXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2016 JP 2016151683**

(43) Date of publication of application:
**07.02.2018 Bulletin 2018/06**

(73) Proprietor: **Ricoh Company, Ltd.
Tokyo 143-8555 (JP)**

(72) Inventors:
• **YOKOTA, Soichiro**
  **Tokyo 143-8555 (JP)**
• **IMAI, Shigeaki**
  **Tokyo 143-8555 (JP)**
• **NAKAMURA, Tadashi**
  **Tokyo 143-8555 (JP)**
• **SAISHO, Kenichiroh**
  **Tokyo 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A1- 2 911 392       EP-A2- 2 927 710
WO-A1-2015/099193       WO-A1-2015/129907**

**Description**

## BACKGROUND OF THE INVENTION

1. Field of the Invention

The present invention relates to parallax calculation systems, moving bodies, and programs.

2. Description of the Related Art

Conventionally, a sensor device (i.e., a three-dimensional sensor) for acquiring three-dimensional information of surrounding environment such as a stereo camera and an electromagnetic distance-measurement device (e.g., a laser radar ranging device, a millimeter wave radar ranging device) has been mounted on various types of moving bodies such as a car.

A stereo camera searches for a counterpart pixel in a comparison image that corresponds to each pixel in a base image and calculates a parallax, in order to obtain a distance to an object. A stereo camera has a characteristic of having a high space-resolution and a high distance-resolution, although the space-resolution and the distance-resolution decrease in a case where there is a long distance to an object.

An electromagnetic distance-measurement device measures a time from emitting an electromagnetic wave to receiving a reflected wave that is reflected by an object, in order to calculate a distance to an object. An electromagnetic distance-measurement device has a characteristic of having a high distance-resolution, regardless of distance to an object, although a space-resolution is low.

Therefore, by combining a stereo camera and an electromagnetic distance-measurement device, a parallax calculation system that takes advantage of both of a stereo camera and an electromagnetic distance-measurement device can be achieved.

Here, there is a problem concerning an electromagnetic distance-measurement device that, although a high distance-resolution can be sustained regardless of distance to an object, signal intensity of a received reflected wave becomes lower in a case where there is a long distance to an object, which makes it difficult to distinguish a reflected wave from a noise. Hence, there is a possibility that an electromagnetic distance-measurement device outputs wrong distance information because of faultily detecting a noise.

For such a reason as described above, with respect to constituting a parallax calculation system provided with an electromagnetic distance-measurement device, it is desired to reduce a probability that an electromagnetic distance-measurement device faultily detects a noise, so that accuracy of distance measurement is improved.

The present invention is to deal with such a problem as described above; the object of the present invention is to improve accuracy of distance measurement performed by an electromagnetic distance-measurement device provided in a parallax calculation system.

Patent Document 1: JP2016011939 A discloses an information processing device for calculating the parallax of an object having little texture even if a pattern is not projected with high accuracy.
Patent Document 2: WO 2015/099193 A1 provides an information processing apparatus which is able to increase the accuracy of parallax computation of stereo images taken by a plurality of image pickup units.
Patent Document 3: WO 2015/129907 A1 relates to a distance measuring device that is capable of detecting a cause of occurrence of an error in a case where parallax calculation is executed by using taken images that are taken by using a plurality of image taking parts.
Patent Document 4: EP 2 927 710 A2 discloses a ranging system for measuring a distance to an object imaged on a captured image, the ranging system enhancing a spatial resolution for calculating the distance to the object.
Patent Document 5: EP 2 911 392 A1 discloses an information processing apparatus that performs parallax calculation on images captured by plural imaging units, the information processing apparatus reducing frequency of occurrence of an error and improving the accuracy of the parallax calculation.

## SUMMARY OF THE INVENTION

The present invention is defined by the subject-matter of the independent claims. The dependent claims are directed to embodiments of advantage.

## BRIEF DESCRIPTION OF THE DRAWINGS

FIG. 1 is a drawing illustrating an example of an external configuration of a parallax calculation system and an example of installing the parallax calculation system, according to an embodiment of the present invention;

FIG. 2 is a drawing illustrating an example of a hardware configuration of the parallax calculation system, according to the embodiment of the present invention;

FIGS. 3A and 3B are drawings for explaining a distance-resolution and a space-resolution of a three-dimensional sensor, according to the embodiment of the present invention;

FIGS. 4A and 4B are drawings for explaining a distance-resolution and a space-resolution of a three-dimensional sensor, according to the embodiment of the present invention;

FIGS. 5A and 5B are drawings illustrating a base pixel region in a base image and a pixel region in a comparison image, according to the embodiment of the present invention;

FIGS. 6A and 6B are drawings illustrating examples of a laser light receiving signal generated by a laser radar ranging unit, according to the embodiment of the present invention;

FIG. 7 is a drawing illustrating a functional configuration of a distance calculation processing unit, according to the embodiment of the present invention;

FIG. 8 is a drawing illustrating details of a functional configuration of a first cost calculating unit, according to the embodiment of the present invention;

FIGS. 9A and 9B are drawings for explaining a method for calculating cost C(p,d), according to the embodiment of the present invention;

FIG. 10 is a drawing illustrating details of a functional configuration of a first synthesis cost calculating unit, according to the embodiment of the present invention;

FIG. 11 is a drawing illustrating r-directions for calculating first path costs $L_r(p,d)$, according to the embodiment of the present invention;

FIG. 12 is a drawing for explaining a method for determining a process range by means of a range determining unit, according to the embodiment of the present invention;

FIGS. 13A and 13B are drawings illustrating the process range determined by the region determining unit, according to the embodiment of the present invention;

FIG. 14 is a drawing illustrating details of a functional configuration of a second cost calculating unit, according to the embodiment of the present invention;

FIG. 15 is a drawing illustrating details of a functional configuration of a second synthetic cost calculating unit, according to the embodiment of the present invention;

FIG. 16 is a drawing illustrating a calculation result of second synthesis cost S' with respect to the base pixel region, according to the embodiment of the present invention; and

FIG. 17 is a flowchart illustrating a flow of a parallax image generating process performed by a distance calculation processing unit, according to the embodiment of the present invention.

## DESCRIPTION OF THE EMBODIMENTS

The following description explains details of each embodiment, with reference to the accompanying drawings. Note that, in the description in the specification and drawings relating to each embodiment, constituent elements with practically the same functional configurations are assigned the same reference signs, in order to omit duplicated explanations.

(Embodiment)

<1. An example of an external configuration of a parallax calculation system and an example of installing the parallax calculation system>

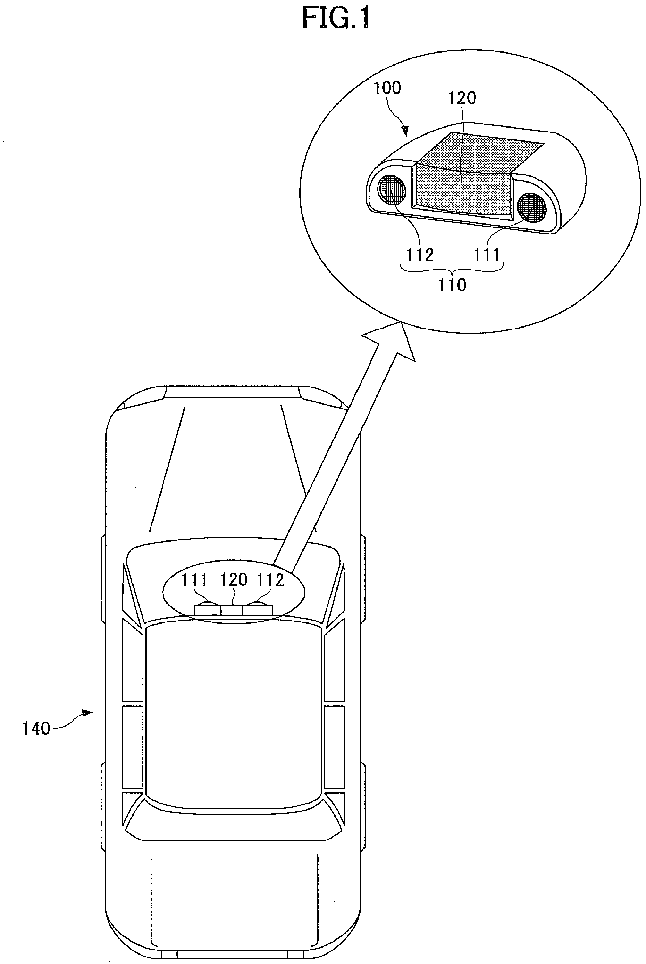

First, the following description explains an example of an external configuration of a parallax calculation system according to an embodiment of the present invention and an example of installing the parallax calculation system. FIG. 1 is a drawing illustrating the example of an external configuration of a parallax calculation system and the example of installing the parallax calculation system.

As illustrated (as an external configuration) at the top part of FIG. 1, a parallax calculation system 100 includes a stereo camera unit 110 and a laser radar ranging unit (or a laser radar ranging device) 120 as sensor devices (or three-dimensional sensors) for obtaining three-dimensional information of the surrounding environment. The stereo camera unit 110 includes a monocular camera unit (i.e., a first image capturing device) 111 and a monocular camera unit (i.e., a second image capturing device) 112. The laser radar ranging unit 120 is disposed between the monocular camera unit 111 and the monocular camera unit 112.

The monocular camera unit 111 and the monocular camera unit 112 capture images on a predetermined frame cycle in a synchronized manner, in order to generate captured images, respectively.

The laser radar ranging unit 120 is a time-of-flight (TOF) laser radar ranging device, which emits a laser beam and receives reflected light of the laser beam in order to measure a distance to a position (i.e., a given object) irradiated with the laser beam.

As illustrated (as an example of installing) at the bottom part of FIG. 1, the parallax calculation system 100 is installed, for example, at a central position on an inner side of a windshield of a vehicle 140. Note that the stereo camera unit 110 and the laser radar ranging unit 120 are both installed to face towards the forward direction of the vehicle 140. In other words, the parallax calculation system 100 is installed, such that the direction for the stereo camera unit 110 to capture images and the direction for the laser radar ranging unit 120 to emit a laser beam are the same.

<2. A hardware configuration of the parallax calculation system>

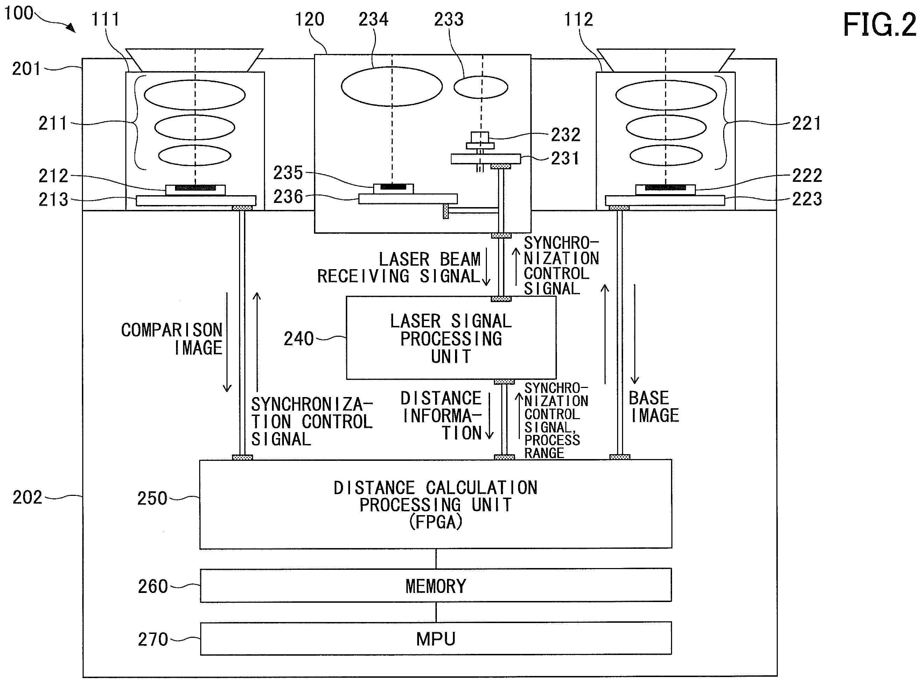

Next, the following description explains a hardware configuration of the parallax calculation system 100. FIG. 2 is a drawing illustrating an example of a hardware configuration of a parallax calculation system.

As illustrated in FIG. 2, the parallax calculation system 100 includes a camera stay 201 and a control-board housing 202.

On the camera stay 201, the monocular camera unit 111, the monocular camera unit 112, and the laser radar ranging unit 120 are provided integrally, which enables down-scaling and cost-cutting of the parallax calculation system 100.

The control-board housing 202 houses a laser signal processing unit 240, a distance calculation processing unit 250, a memory 260, and a micro processing unit (MPU) 270. As the laser signal processing unit 240 is configured individually apart from the laser radar ranging unit 120, down-scaling of the laser radar ranging unit 120 is possible. Therefore, arrangement of the laser radar ranging unit 120 in the present embodiment to be between the monocular camera unit 111 and the monocular camera unit 112 is enabled.

Note that, although the laser signal processing unit 240 and the distance calculation processing unit 250 are configured on individual circuit boards in the example illustrated in FIG. 2, the laser signal processing unit 240 and the distance calculation processing unit 250 may be configured on the same circuit board. Decreasing the number of circuit boards enables cost-cutting.

Next, the following description explains details of each part of the camera stay 201. As illustrated in FIG. 2, the monocular camera unit 111 includes a camera lens unit 211, an imaging element 212, and a sensor board 213. External light that enters through the camera lens unit 211 is received by the imaging element 212 to perform photoelectric conversion on a predetermined frame cycle. A signal obtained from photoelectric conversion is processed by the sensor board 213, so as to generate a captured image frame by frame. A generated captured image is sent to the distance calculation processing unit 250 one by one as a comparison image.

Note that the monocular camera unit 112 has the same configuration as the monocular camera unit 111. A captured image generated in such a manner as synchronized with the monocular camera unit 111 based on a synchronization control signal is sent to the distance calculation processing unit 250 one by one as a base image.

The laser radar ranging unit 120 includes a light source driving circuit 231, a laser light source 232, and a projection lens 233. The light source driving circuit 231 is operated based on a synchronization control signal provided from the laser signal processing unit 240 to apply a modulated current (i.e., a light source emission signal) to the laser light source 232. In this way, the laser light source 232 emits a laser beam. A laser beam emitted from the laser light source 232 is externally emitted through the projection lens 233.

Note that, in the present embodiment, an infrared semiconductor laser diode (LD) is used as the laser light source 232 to emit a laser beam, which is a near-infrared light of a wavelength of 800 nm or more and 950 nm or less. Further, the laser light source 232 emits a pulsed laser beam on a cyclic basis, based on a modulated current (i.e., a light source emission signal) applied by the light source driving circuit 231. Further, the laser light source 232 emits, on a cyclic basis, a pulsed laser beam having a short pulse-width of approximately a few nanoseconds to a few hundred nanoseconds.

A pulsed laser beam emitted from the laser light source 232 is externally emitted through the projection lens 233 as a projection beam, with which a given position (i.e., a given object) is irradiated. Note that a laser beam emitted from the laser light source 232 is collimated by the projection lens 233 into nearly parallel light, such that an irradiated area of an object is predetermined to be very small.

The laser radar ranging unit 120 further includes a light receiving lens 234, a light receiving element 235, and a light receiving signal amplifying circuit 236. A laser beam, with which a given object is irradiated, is diffused homogeneously in various directions. Then, a light component reflected back through the same path as the laser beam emitted from the laser radar ranging unit 120 is guided, as reflected light, through the light receiving lens 234 to the light receiving element 235.

In the present embodiment, a silicon PIN photodiode or an avalanche photodiode is used as the light receiving element 235. The light receiving element 235 generates a laser light receiving signal through photoelectric conversion of reflected light. The light receiving signal amplifying circuit 236 amplifies the generated laser light receiving signal to send to the laser signal processing unit 240.

Next, the following description explains details of each part of the control-board housing 202. The laser signal processing unit 240 is an example of a calculating unit; the laser signal processing unit 240 calculates a distance to a given object, based on a laser light receiving signal sent from the laser radar ranging unit 120, in order to send calculated distance information to the distance calculation processing unit 250. Note that, with respect to a laser light receiving signal sent from the laser radar ranging unit 120, the laser signal processing unit 240 processes the laser light receiving signal within a process range sent from the distance calculation processing unit 250 for calculating a distance to a given object.

The distance calculation processing unit 250 is configured with a special integrated circuit such as a field-programmable gate array (FPGA) or an application specific integrated circuit (ASIC). The distance calculation processing unit 250 outputs, to the monocular camera unit 111, the monocular camera unit 112, and the laser signal processing unit 240, a synchronization control signal for controlling timings of capturing images and projecting/receiving light of a laser beam. Further, the distance calculation processing unit 250 transmits a process range for processing a laser light receiving signal to the laser signal processing unit 240.

Furthermore, the distance calculation processing unit 250 generates a parallax image, based on a comparison image sent from the monocular camera unit 111, a base image sent from the monocular camera unit 112, and distance information sent from the laser signal processing unit 240. The distance calculation processing unit 250 stores a generated parallax image in the memory 260.

The memory 260 stores a parallax image generated by the distance calculation processing unit 250. Further, the memory 260 provides a work area for the distance calculation processing unit 250 and the MPU 270 to execute each of various processes.

The MPU 270 controls each unit housed by the control-board housing 202. Further, the MPU 270 performs an analyzing process for analyzing a parallax image stored in the memory 260.

<3. Distance-resolutions and space-resolutions of three-dimensional sensors>

Next, the following description briefly explains a distance-resolution and a space-resolution of each of the three-dimensional sensors (i.e., the stereo camera unit 110 and the laser radar ranging unit 120) included in the parallax calculation system 100.

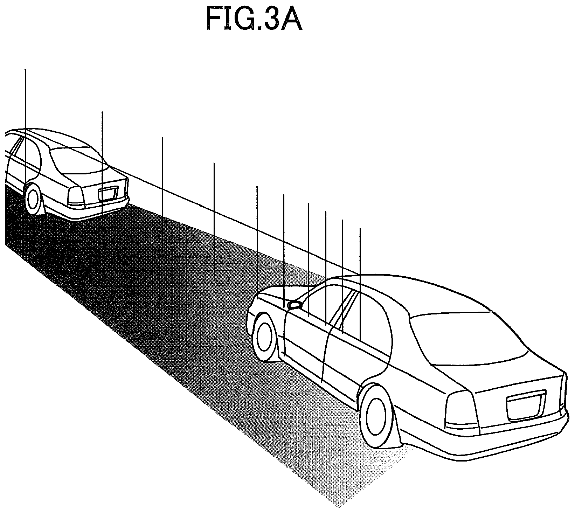

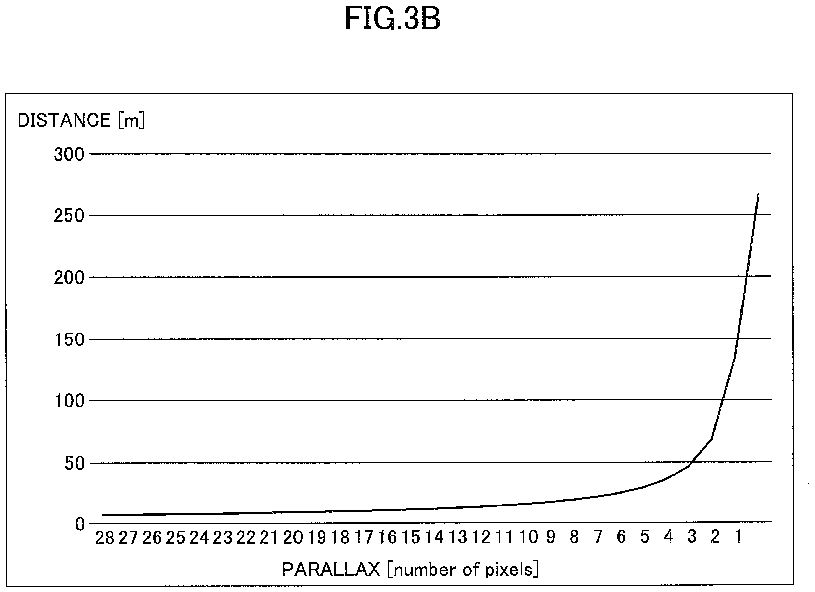

FIGS. 3A through 4B are drawings for explaining distance-resolutions and space-resolutions of the three-dimensional sensors. Among the drawings, FIGS. 3A and 3B are drawings for explaining a distance-resolution and a space-resolution of the stereo camera unit 110. As illustrated in FIG. 3A, the distance-resolution of distance information, which is calculated based on images captured by the stereo camera unit 110, is higher as distance to the stereo camera unit 110 is shorter and is lower as distance to the stereo camera unit 110 is farther.

Additionally, as illustrated in the graph in FIG. 3B, the distance-resolution of distance information is not proportional to distance to an object; the distance-resolution drastically decreases at a point of a predetermined distance (e.g., 25 m) or farther. Note that, in FIG. 3B, the horizontal axis indicates parallax (represented by pixels) and the vertical axis indicates distance to an object. In the case of the graph in FIG. 3B, the distance-resolution is higher at a point closer to the bottom-left corner and is lower at a point closer to the top-right corner.

In other words, the distance-resolution of distance information, which is calculated based on images captured by the stereo camera unit 110, is high at a point of a predetermined distance or shorter. Note that, as the space-resolution of the stereo camera unit 110 increases with the distance-resolution, the space-resolution of distance information, which is calculated based on images captured by the stereo camera unit 110, is high at a point of a predetermined distance or closer as well.

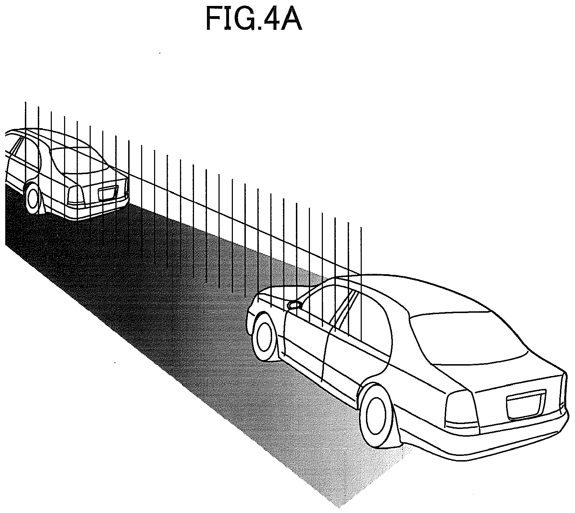

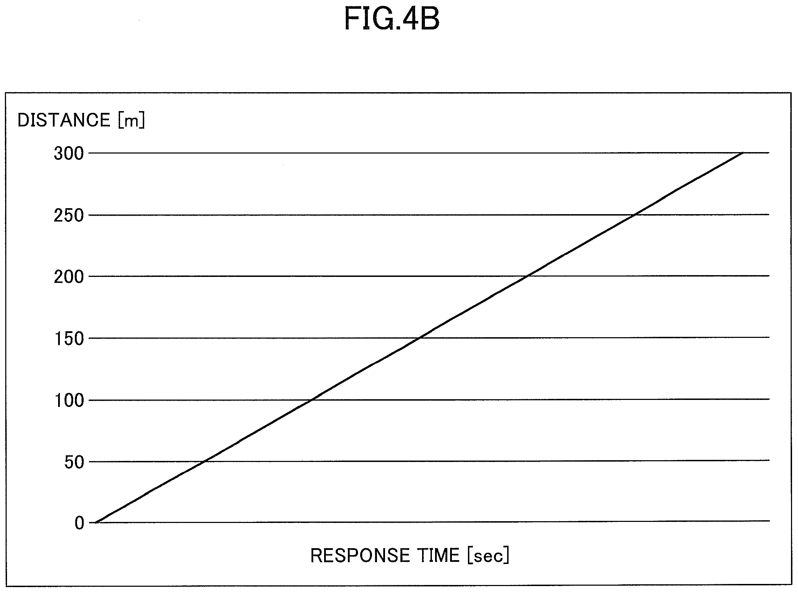

FIGS. 4A and 4B are drawings for explaining a distance-resolution and a space-resolution of the laser radar ranging unit 120. As illustrated in FIG. 4A, the distance-resolution of distance information, which is calculated based on a laser light receiving signal generated by the laser radar ranging unit 120, is constant, regardless of distance from the laser radar ranging unit 120. The reason is that response time, which is from emitting a laser beam to receiving light of the laser beam, is proportional to distance to an object as illustrated with a slope in the graph in FIG. 4B, which is generally a constant slope. Note that, in FIG. 4B, the horizontal axis indicates response time, which is from emitting a laser beam to receiving light of the laser beam, and the vertical axis indicates distance to an object.

In addition, the laser radar ranging unit 120 according to the present embodiment measures a response time on the order of nanoseconds. Hence, the distance-resolution of distance information, as calculated based on a laser light receiving signal generated by the laser radar ranging unit 120, is generally higher than the distance-resolution of the stereo camera unit 110 at any distance, regardless of distance to an object.

However, as the laser radar ranging unit 120 emits a laser beam in a synchronized manner with image capturing of the stereo camera unit 110, the distance that can be reached by an emitted laser beam at an instance for the stereo camera unit 110 to capture one frame of image is limited. Therefore, a high space-resolution cannot be achieved with the laser radar ranging unit 120.

As described above, each of the three-dimensional sensors included in the parallax calculation system 100 has different characteristics, in terms of distance-resolutions and space-resolutions. Therefore, for taking advantage of each characteristic, it is effective for the parallax calculation system 100 to mainly utilize distance information that is calculated based on images captured by the stereo camera unit 110, in a case of being within a predetermined distance to an object. Contrarily, in a case of being farther than a predetermined distance to an object, it is effective to mainly utilize distance information that is calculated based on a laser light receiving signal generated by the laser radar ranging unit 120.

<4. Characteristics of parallax calculation>

Next, the following description explains characteristics of parallax calculation performed by the distance calculation processing unit 250, based on images captured by the stereo camera unit 110. First, below is an explanation of a "base image region", i.e., a pixel region to be an object of calculation in a base image, and a pixel region in a comparison image, which are utilized for parallax calculation performed by the distance calculation processing unit 250.

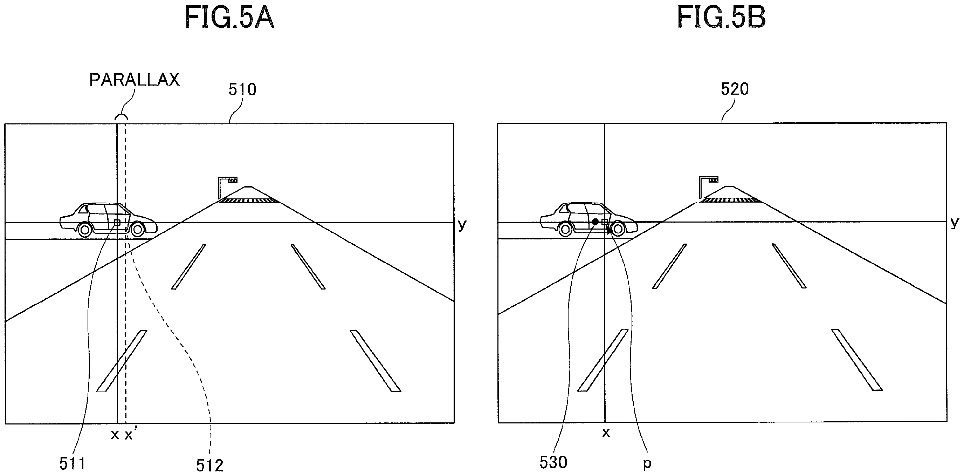

FIGS. 5A and 5B are drawings illustrating a base pixel region in a base image and a pixel region in a comparison image. FIG. 5B is a drawing illustrating a base image 520 sent from the monocular camera unit 112. In the base image 520, a pixel region p is a "base pixel region", which is a pixel region that is currently an object of calculation performed by the distance calculation processing unit 250. In the example of FIG. 5B, the base pixel region p is a pixel region at a position specified by coordinates (x, y).

Furthermore, FIG. 5A is a drawing illustrating a comparison image 510 sent from the monocular camera unit 111. In the comparison image 510, a pixel region 511 is specified by an x-coordinate and a y-coordinate that are equal to the x-coordinate and the y-coordinate of the base pixel region p in the base image 520.

A position 512 is a position of a "counterpart pixel region" that corresponds to the base pixel region p of the base image 520. An object (i.e., a part of a side surface of another vehicle, in the example of FIG. 5B) in the real space that corresponds to the position of the base pixel region p matches an object in the real space that corresponds to the position 512 of the counterpart pixel region. However, as a position from which the base image 520 is captured is different from a position from which the comparison image 510 is captured with respect to the lateral direction, the position 512 of the comparison image 510 is shifted from the pixel region 511 in the lateral direction by an amount of a parallax.

Note that, for accurately extracting the position 512 of the counterpart pixel region, it is effective to utilize distance information obtained by the laser radar ranging unit 120. The reason is that, in a case where the laser radar ranging unit 120 emits a laser beam to irradiate a position (or near the position) that corresponds to the base pixel region p, it is possible to obtain distance information of the irradiated position with a high distance-resolution. Note that, as a characteristic of parallax calculation performed by the distance calculation processing unit 250, it is possible to improve accuracy by utilizing distance information (i.e., distance information obtained by the laser radar ranging unit 120) of a high distance-reso lution.

In the example of FIG. 5B, a point 530 is a position irradiated with a laser beam emitted by the laser radar ranging unit 120 at a timing of capturing the base image 520, which is schematically illustrated such that the position is superimposed on the base image 520. In such a case, the parallax calculation system 100 according to the present embodiment utilizes distance information that is calculated based on a laser light receiving signal obtained by irradiating the point 530, in order to improve accuracy of parallax calculation with respect to the base pixel region p (details of which are explained in the following description).

<5. Distance information calculated by the laser signal processing unit>

Next, the following description explains characteristics of distance information calculated by the laser signal processing unit 240. As described above, the laser radar ranging unit 120 is capable of measuring a response time on the order of nanoseconds, and therefore has a higher distance-resolution than the stereo camera unit 110 at any distance, regardless of distance to an object.

However, in a case of a TOF laser radar ranging unit device such as the laser radar ranging unit 120, signal intensity of a laser light receiving signal decreases in a case of a long distance to an object. Formula 1 below expresses a relation between distance L to an object and signal intensity $P_r$ of a laser light receiving signal generated by the laser radar ranging unit 120.
(Formula 1)

$$P_r = \frac{S_{Rcv}}{2\pi L^2} \cdot \eta \cdot \frac{S_{Tgt}}{S_{Snd}} \cdot R_{Tgt} \cdot P_0 \cdot T_{FG} \qquad (1)$$

Note that, in above Formula 1, $S_{RCV}$ indicates an area of the light receiving element 235, and $\eta$ indicates ratio of a laser beam that is input to the light receiving element 235 to a laser beam that is collected at the light receiving element 235. Further, $S_{Snd}$ indicates an irradiated area of an object irradiated with a laser beam, and $R_{Tgt}$ indicates reflection rate of an object. Further, $P_O$ indicates output of the laser light source 232, and $T_{FG}$ indicates light use efficiency of the laser light source 232.

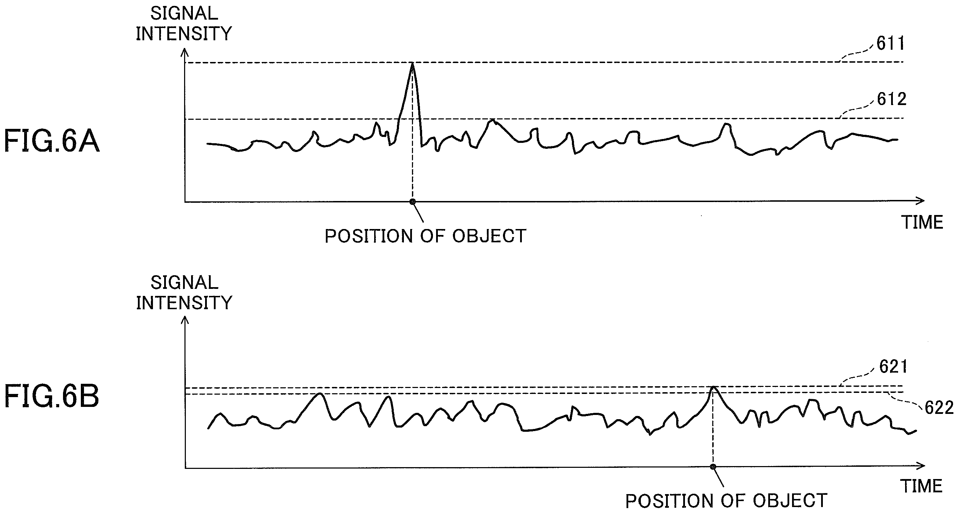

As illustrated in above Formula 1, the signal intensity $P_r$ of a laser light receiving signal decreases inversely with the square of distance L to an object. Therefore, there may be a case where it is difficult for the laser signal processing unit 240 to detect a signal indicative of light reflected by an object out of an obtained laser light receiving signal, even within a predetermined distance. In such a case, the laser signal processing unit 240 faultily detects a noise, which means that the laser signal processing unit 240 cannot output correct distance information. Detailed explanation is given, with reference to FIGS. 6A and 6B.

FIGS. 6A and 6B are drawings illustrating examples of a laser light receiving signal generated by a laser radar ranging unit. The horizontal axis indicates response time, which is from emitting a laser beam to receiving light of the laser beam. The vertical axis indicates signal intensity of a laser light receiving signal.

FIG. 6A is a drawing illustrating an example of a laser light receiving signal in a case where distance L to an object irradiated with a laser beam is short. As illustrated in FIG. 6A, in the case where distance L to an object irradiated with a laser beam is short, there is a large difference between signal intensity (611) of a signal indicative of light reflected by the object and signal intensity (612) of a signal indicative of light reflected not by the object. Therefore, the signal indicative of light reflected by the object can be detected easily.

Contrarily, FIG. 6B is a drawing illustrating an example of a laser light receiving signal in a case where distance L to an object irradiated with a laser beam is long. As illustrated in FIG. 6B, in the case where distance L to an object irradiated with a laser beam is long, there is small difference between signal intensity (621) of a signal indicative of light reflected by the object and signal intensity (622) of a signal indicative of light reflected not by the object. Therefore, the signal indicative of light reflected by the object cannot be detected easily; there is a high probability that a signal indicative of light reflected not by the object is faultily detected as a signal indicative of light reflected by the object. Consequently, in spite of a high distance-resolution of the laser radar ranging unit 120, the laser signal processing unit 240 may output faulty distance information.

To deal with the above problem, the parallax calculation system 100 according to the present embodiment sets limitation on a process range of a laser light receiving signal, so as to provide correct distance information when distance information calculated by the laser signal processing unit 240 is utilized for parallax calculation. Specifically, in a case of the parallax calculation system 100 according to the present embodiment, the process range of a laser light receiving signal is determined in accordance with distance information calculated based on images captured by the stereo camera unit 110.

As described above, according to the present embodiment, by setting limitation on the process range of a laser light receiving signal, it is possible to reduce the probability of faultily detecting a signal indicative of light reflected not by an object as a signal indicative of light reflected by the object. Consequently, the distance calculation processing unit 250 is capable of performing parallax calculation by use of correct distance information that is output from the laser signal processing unit 240.

<6. A functional configuration of the distance calculation processing unit 250>

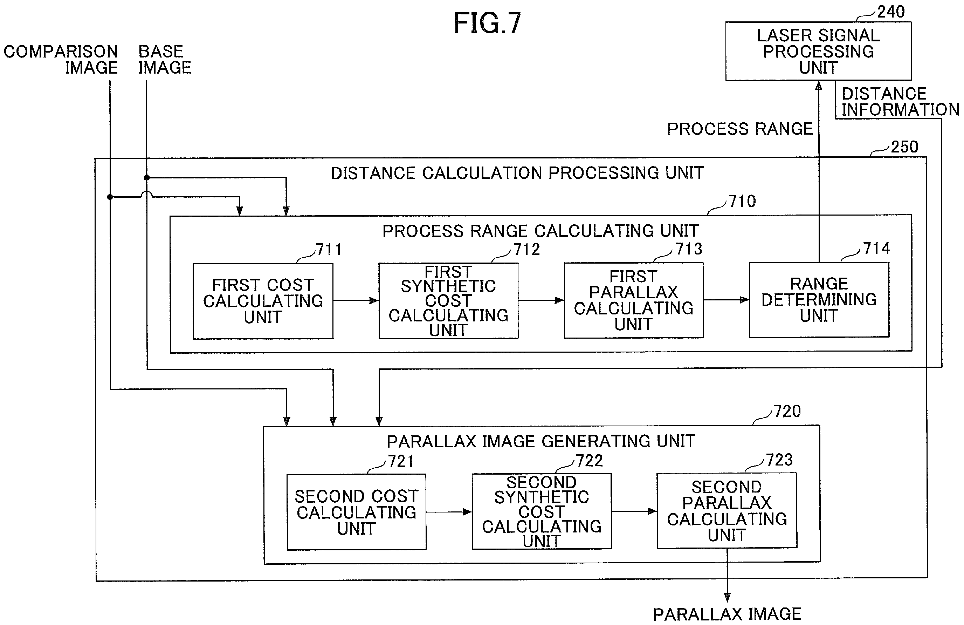

Next, the following description explains a functional configuration of the distance calculation processing unit 250. FIG. 7 is a drawing illustrating a functional configuration of a distance calculation processing unit. Note that, in FIG. 7, from among functional configurations of a distance calculation processing unit, only a functional configuration for enabling processing of parallax calculation is illustrated; other functional configurations (e.g., a function for sending a synchronization control signal, etc.) are omitted.

As illustrated in FIG. 7, the distance calculation processing unit 250 includes a process range calculating unit 710 and a parallax image generating unit 720, as the functional configuration for enabling processing of parallax calculation.

The process range calculating unit 710 further includes a first cost calculating unit 711, a first synthesis cost calculating unit 712, a first parallax calculating unit 713, and a range determining unit 714.

Furthermore, the parallax image generating unit 720 further includes a second cost calculating unit 721, a second synthesis cost calculating unit 722, and a second parallax calculating unit 723.

The following description explains details of each part of the process range calculating unit 710 and the parallax image generating unit 720.

<7. Details of each part of the process range calculating unit 710>

First, the following description explains details of each part of the process range calculating unit 710.

(1) Functional configuration of the first cost calculating unit 711

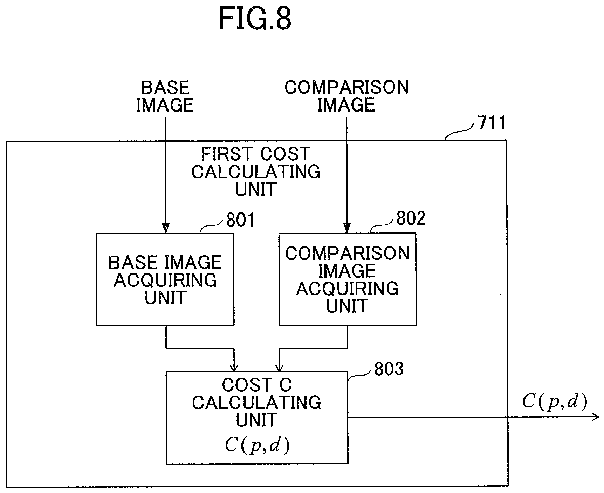

FIG. 8 is a drawing illustrating details of a functional configuration of a first cost calculating unit. As illustrated in FIG. 8, the first cost calculating unit 711 includes a base image acquiring unit 801, a comparison image acquiring unit 802, and a cost C calculating unit 803.

The base image acquiring unit 801 acquires a base image 520 from the monocular camera unit 112. Further, the base image acquiring unit 801 extracts a base pixel region p from the base image 520. The comparison image acquiring unit 802 acquires a comparison image 510 from the monocular camera unit 111.

The cost C calculating unit 803 calculates cost $C(p,d)$ between the base pixel region p and each pixel region in the comparison image 510. Cost C is a parameter indicative of degree of dissimilarity between a base pixel region p and each pixel region in the comparison image 510.

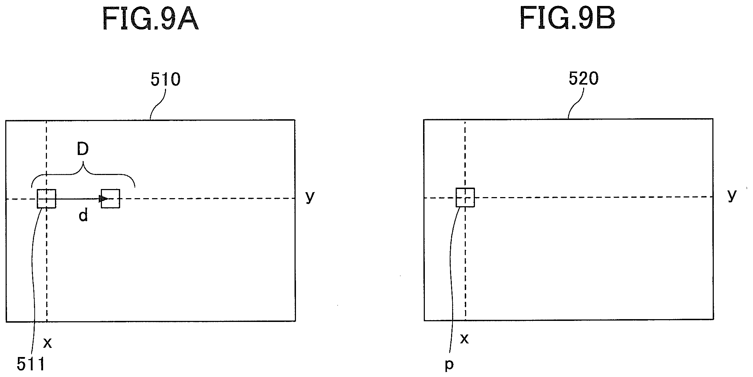

FIGS. 9A and 9B are drawings for explaining a method for calculating the cost $C(p,d)$. As illustrated in FIG. 9A, the cost C calculating unit 803 changes shift amount d within a predetermined range (i.e., 0 through D), so as to sequentially shift the pixel region 511 in the comparison image 510. Then, the cost C calculating unit 803 calculates the cost $C(p,d)$, which is indicative of degree of dissimilarity between the pixel value of the pixel region 511 at positions for each shift amount d and the pixel value of the base pixel region p of the base image 520 illustrated in FIG. 9B.

Note that the cost $C(p,d)$ is calculated by use of a publicly known matching method, in which calculation is based on a difference between pixel values of pixel regions such as Sum of Absolute Difference (SAD) or Sum of Squared Distance (SSD). Hence, the value of the calculated cost $C(p,d)$ becomes lower as the pixel value is more similar to the pixel value of the base pixel region p, and becomes higher as the pixel value is less similar to the pixel value of the base pixel region p.

The cost C calculating unit 803 transmits the calculated cost $C(p,d)$ to the first synthesis cost calculating unit 712.

(2) Functional configuration of the first synthesis cost calculating unit 712

The first synthesis cost calculating unit 712 calculates first synthesis cost S, as a synthesis result, by performing synthesis with respect to cost $C(p,d)$ of each pixel region, which is transmitted from the first cost calculating unit 711. The first synthesis cost calculating unit 712 calculates multiple first path costs $L_r$ by use of a processing method such as Semi-Global Matching (SGM) and then aggregates the first path costs $L_r$ with respect to a base pixel region p, in order to obtain first synthesis cost S.

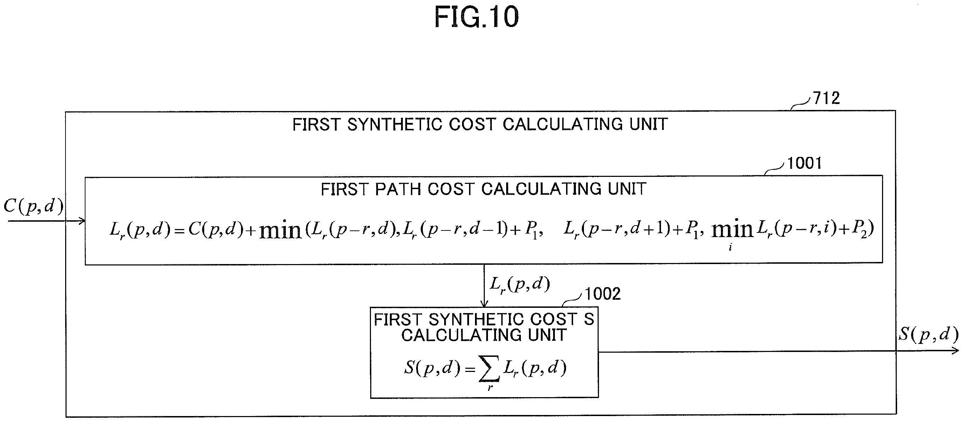

FIG. 10 is a drawing illustrating details of a functional configuration of a first synthesis cost calculating unit. As illustrated in FIG. 10, the first synthesis cost calculating unit 712 includes a first path cost calculating unit 1001 and a first synthesis cost S calculating unit 1002.

The first path cost calculating unit 1001 acquires the cost $C(p,d)$ from the first cost calculating unit 711, and then calculates the first path costs $L_r(p,d)$, based on Formula 2 below.

(Formula 2)

$$L_r(p,d) = C(p,d) + \min\left(L_r(p-r,d), L_r(p-r,d-1) + P_1, \quad L_r(p-r,d+1) + P_1, \min_i L_r(p-r,i) + P_2\right)$$

$$(2)$$

Note that Formula 2 above is a general formula for obtaining path cost $L_r$ by use of SGM. Additionally, $P_1$ and $P_2$ in Formula 2 above are fixed parameters.

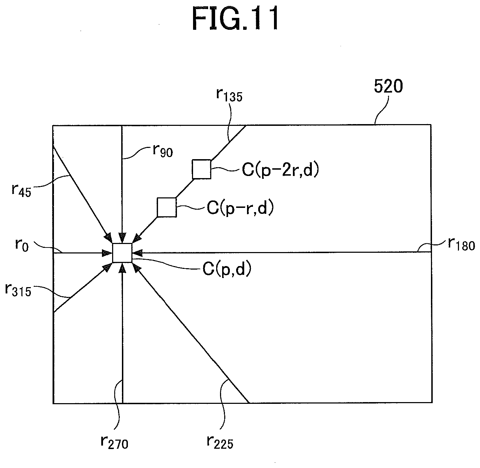

Based on above Formula 2, the first path cost calculating unit 1001 adds, to the cost $C(p,d)$ with respect to the base pixel region p, the smallest value of first path cost $L_r$ with respect to each pixel region in an r-direction illustrated in FIG. 11, in order to obtain first path cost $L_r(p,d)$. Note that FIG. 11 is a drawing illustrating r-directions for calculating first path costs $L_r(p,d)$.

As illustrated in FIG. 11, the first path cost calculating unit 1001 calculates first path cost $L_r$ (e.g., $L_{r135}(p-2r,d)$) with respect to a pixel region at the end of an r-direction (e.g., $r_{135}$-direction) of the base pixel region p. Then, the first path cost calculating unit 1001 calculates first path cost $L_r$ (e.g., $L_{r135}(p-r,d)$) along the r-direction. In the present embodiment, the first path cost calculating unit 1001 calculates first path cost $L_r$ (e.g., $L_{r135}(p,d)$) by repeating the above process with respect to eight directions, in order to obtain first path cost $L_{r0}(p,d)$ through $L_{r315}(p,d)$.

The first synthesis cost S calculating unit 1002 calculates first synthesis cost $S(p,d)$ by use of Formula 3 below, based on the first path costs $L_{r0}(p,d)$ through $L_{r315}(p,d)$ with respect to the eight directions, which are obtained by the first path cost calculating unit 1001.

(Formula 3)

$$S(p,d) = \sum_r L_r(p,d) \qquad\qquad (3)$$

The first synthesis cost S calculating unit 1002 transmits the calculated first synthesis cost $S(p,d)$ to the first parallax calculating unit 713.

(3) Function of the first parallax calculating unit 713

The first parallax calculating unit 713 extracts a counterpart pixel region in the comparison image 510 which corresponds to the base pixel region p, based on the first synthesis cost $S(p,d)$ calculated by the first synthesis cost calculating unit 712, in order to calculate a parallax with respect to the base pixel region p.

Note that the first cost calculating unit 711 and the first synthesis cost calculating unit 712 perform the same processes with respect to other base pixel regions in the base image 520. Then, the first parallax calculating unit 713 calculates a parallax (i.e. a first parallax) with respect to each of the base pixel regions and transmits calculation results to the range determining unit 714.

(4) Function of the range determining unit 714

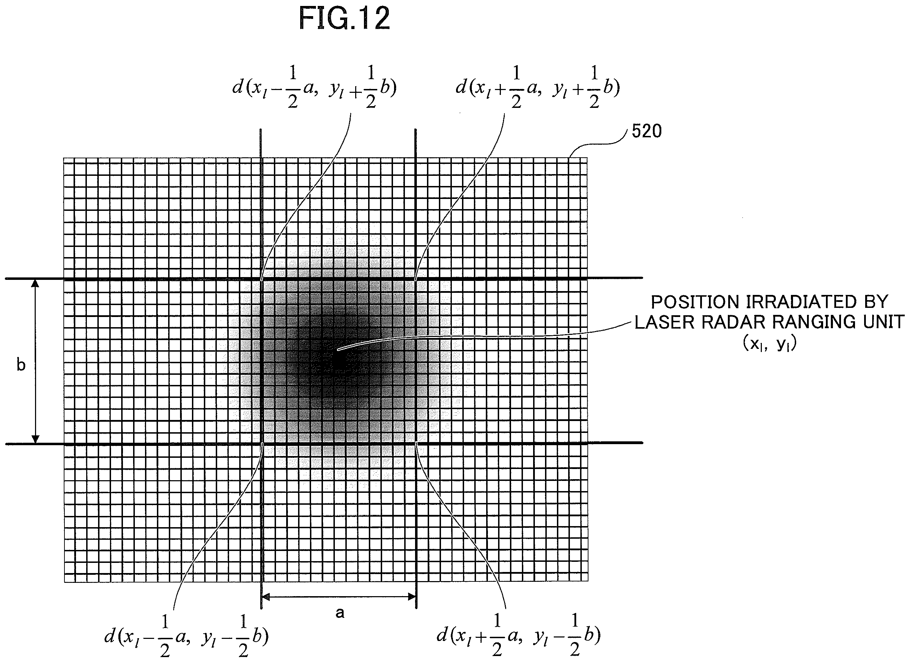

From among the calculation results of parallaxes (i.e. first parallaxes) transmitted from the first parallax calculating unit 713, the range determining unit 714 extracts parallaxes with respect to the base pixel region p and pixel regions near the base pixel region p, in order to determine a process range. Specific explanation is given, with reference to FIG. 12.

FIG. 12 is a drawing for explaining a method for determining a process range by means of a range determining unit. In FIG. 12, pixel regions of the base image 520, which correspond to the position (i.e., the point 530) irradiated with a laser beam by the laser radar ranging unit 120 and positions near the irradiated position, are illustrated.

Here, it is assumed that an object in the real space that corresponds to a position specified by coordinates ($x_l$, $y_l$) of the point 530 in the base image 520 is irradiated with a laser beam as illustrated in FIG. 12. Note that the coordinates ($x_l$, $y_l$) may match coordinates (x, y) of the base pixel region p or may be somewhat shifted relative to match the coordinates (x, y) of the base pixel region p.

In such a case as above, the range determining unit 714 extracts pixel regions of $\pm 1/2a$ pixels in the horizontal direction and $\pm 1/2b$ pixels in the vertical direction, with the center at the irradiated position ($x_l$, $y_l$).

Further, from among the parallaxes calculated by the first parallax calculating unit 713, the range determining unit 714 extracts parallaxes calculated with respect to the extracted pixel regions. Note that, in the example of FIG. 12, for convenience of illustration, from among the parallaxes calculated with respect to the pixel regions extracted by the range determining unit 714, only parallaxes calculated with respect to a pixel region on the upper left, a pixel region on the upper right, a pixel region on the lower left, and a pixel region on the lower right are illustrated.

From among the extracted parallaxes, the range determining unit 714 further extracts the most frequently calculated parallax value.

Then, the range determining unit 714 functions as a determining unit, to determine a process range for the laser signal processing unit 240 to process a laser light receiving signal, based on a distance corresponding to $\pm 1$ pixels to the most frequently calculated parallax value.

Specifically, from among the extracted parallaxes, the range determining unit 714 determines the process range for processing a laser light receiving signal to be from the minimum distance, which corresponds to +1 pixel to the most frequently calculated parallax value, to the maximum distance, which corresponds to -1 pixel to the most frequently calculated parallax value. That is to say, positions of the minimum distance and the maximum distance defining the process range become closer to the laser signal processing unit 240 for a larger parallax. Contrarily, positions of the minimum distance and the maximum distance defining the process range become farther from the laser signal processing unit 240 for a smaller parallax.

Furthermore, the range determining unit 714 transmits the determined process range to the laser signal processing unit 240. In this way, the laser signal processing unit 240 detects, in the transmitted process range of a laser light receiving signal, a signal indicative of light reflected by an object, in order to calculate distance information with respect to the point 530, for example. Note that the laser signal processing unit 240 detects a signal indicative of light reflected by an object in a process range, which is converted into a time range obtained by dividing, by light speed, each of the minimum distance and the maximum distance defining the transmitted process range.

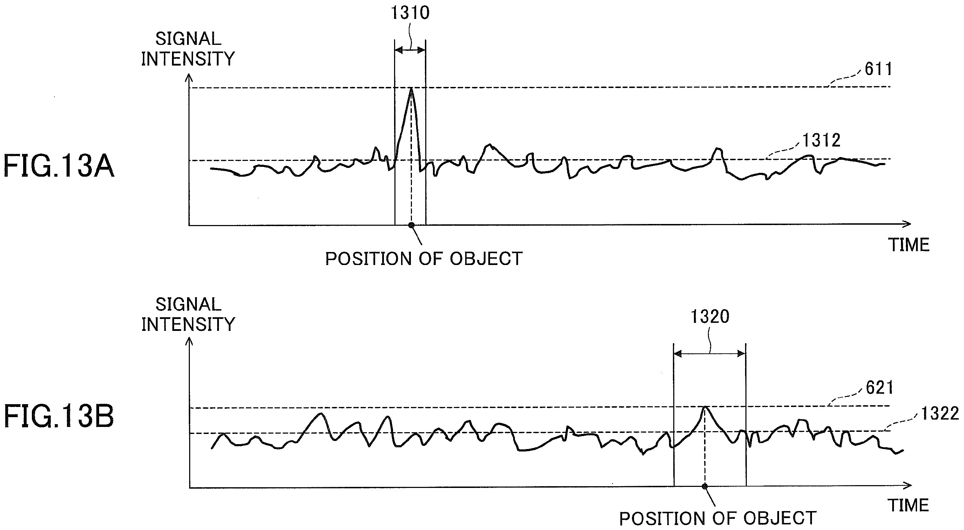

FIGS. 13A and 13B are drawings illustrating a process range determined by a region determining unit. In FIGS. 13A and 13B, the horizontal axis indicates response time, which is from emitting a laser beam to receiving light of the laser beam, and the vertical axis indicates signal intensity of a laser light receiving signal. In FIGS. 13A and 13B, process ranges 1310 and 1320 (i.e., process ranges converted into time ranges) are determined by the range determining unit 714.

Note that FIG. 13A is a drawing illustrating an example of a laser light receiving signal in a case where distance L to an object irradiated with a laser beam is short. As illustrated in FIG. 13A, in the process range 1310, in the case where distance L to an object irradiated with a laser beam is short, there is larger difference between signal intensity (611) of a signal indicative of light reflected by the object and signal intensity (1312) of a signal indicative of light reflected not by the object.

Therefore, a signal indicative of light reflected by an object can be detected more easily.

Further, FIG. 13B is a drawing illustrating an example of a case where distance L to an object irradiated with a laser beam is long. As illustrated in FIG. 13B, in the process range 1320, even in the case where distance L to an object (e.g., the point 530) irradiated with a laser beam is long, there is a larger difference between signal intensity (621) and signal intensity (1322). In other words, difference between signal intensity of a signal indicative of light reflected by an object and signal intensity of a signal indicative of light reflected not by the object can be larger. Therefore, a signal indicative of light reflected by an object can be detected easily; it is possible to decrease the probability of faultily detecting a signal indicative of light reflected not by the object as a signal indicative of light reflected by the object.

Note that, although the above description explains a case where, from among parallaxes extracted by the range determining unit 714, the process range is determined based on a distance corresponding to $\pm 1$ pixels to the most frequently calculated parallax, the method for determining a process range is not limited to as such. For example, the range determining unit 714 may determine a process range, based on a distance corresponding to a parallax calculated by below Formula 4.

(Formula 4)

$$\left[d_{\min}, \ d_{\max}\right] = d_{\mathrm{mode}} \pm w\sqrt{\frac{1}{n'}\sum\nolimits_{i=1}^{n'}\left(d_i' - d_{\mathrm{mode}}\right)} \qquad (4)$$

In above Formula 4, $d_{\mathrm{mode}}$ is the most frequently calculated parallax from among parallaxes calculated with respect to the base pixel region p and pixel regions near the base pixel region p. w is a coefficient indicative of a range in standard deviation with respect to the most frequently calculated parallax, n' is indicative of the number of parallaxes within $\pm 1$ pixels to the most frequently calculated parallax, from among integral parallaxes calculated with respect to the base pixel region p and the pixel regions near the base pixel region p. d' is indicative of parallaxes within $\pm 1$ pixels to the most frequently calculated parallax, from among the integral parallaxes calculated with respect to the base pixel region p and the pixel regions near the base pixel region p.

According to above Formula 4, a process range can be wider in a case of large variability of parallaxes, and can be narrower in a case of small variability of parallaxes.

<8. Details of each part of the parallax image generating unit 720>

Next, the following description explains details of each part of the parallax image generating unit 720.

(1) Functional configuration of the second cost calculating unit 721

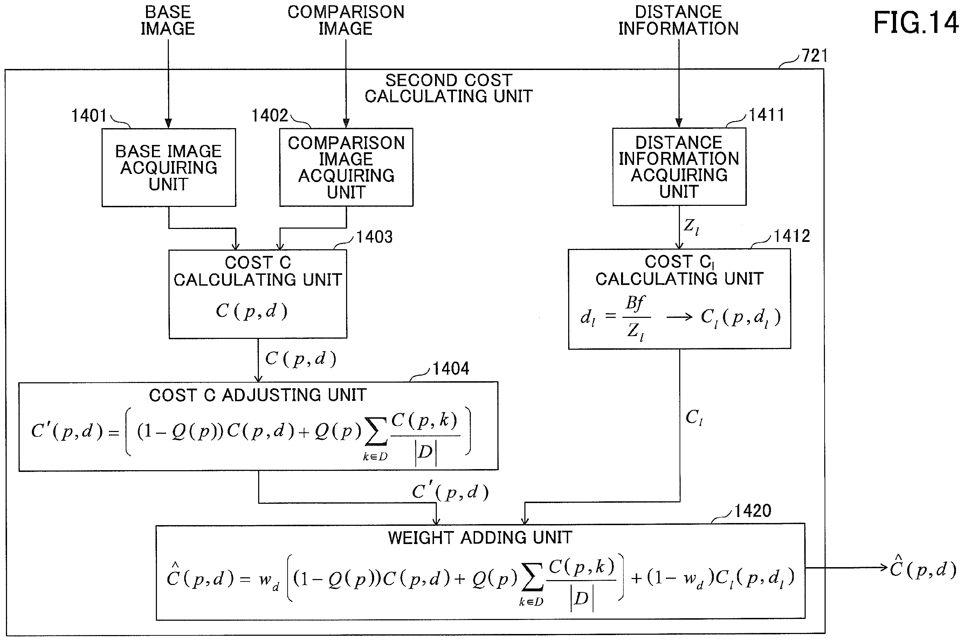

FIG. 14 is a drawing illustrating details of a functional configuration of a second cost calculating unit. As illustrated in FIG. 14, the second cost calculating unit 721 includes a base image acquiring unit 1401, a comparison image acquiring unit 1402, a cost C calculating unit 1403, and a cost C adjusting unit 1404. Further, the second cost calculating unit 721 includes a distance information acquiring unit 1411, a cost $C_l$ calculating unit 1412, and a weight adding unit 1420.

The base image acquiring unit 1401 acquires the base image 520 from the monocular camera unit 112. Further, the base image acquiring unit 1401 extracts the base pixel region p from the acquired base image 520. The comparison image acquiring unit 1402 acquires the comparison image 510 from the monocular camera unit 111.

The cost C calculating unit 1403 calculates cost C(p,d) with respect to the base pixel region p. Note that the method for calculating the cost C(p,d), which is explained above with reference to FIGS. 9A and 9B, is omitted in the following description.

The cost C adjusting unit 1404 adjusts, based on reliability, the cost C(p,d) with respect to the base pixel region p, which is calculated by the cost C calculating unit 1403. The cost C adjusting unit 1404 performs adjustment by use of Formula 5 below to obtain adjusted cost C'(p,d).

(Formula 5)

$$C'(p,d) = \left( (1 - Q(p))C(p,d) + Q(p)\sum_{k \in D} \frac{C(p,k)}{|D|} \right) \qquad (5)$$

Here, D is indicative of the maximum value of the shift amount, k is indicative of a count value of the shift amount. Further, Q(p) is indicative of reliability of the cost C(p,d) with respect to the base pixel region p. The reliability Q(p) is calculated, for example, by Formula 6 below.

(Formula 6)

$$Q(p) = \frac{C_{min2}}{C_{min1}} \qquad (6)$$

Here, $C_{min1}$ and $C_{min2}$ are indicative of the lowest cost value and the second lowest cost value, respectively, with respect to the cost C(p,d) calculated with the shift amount d varying in a predetermined range (i.e., 0 through D). Note that the reliability Q(p) calculated by Formula 6 above is obtained by modifying the value calculated based on $C_{min1}$ and $C_{min2}$, such that the value is normalized to be a value of 0 or more and less than 1.0, in which the reliability is higher as the value approaches 1.0. Then, the reliability Q(p) is utilized for Formula 5.

The adjusted cost C'(p,d) adjusted by the cost C adjusting unit 1404 becomes a larger value in a case where, for example, the base pixel region p is in a region with less texture (i.e., a region with less change in pixel value between adjacent pixel regions) and the reliability Q(p) is low.

The distance information acquiring unit 1411 acquires distance information from the laser signal processing unit 240. In regard to the distance information acquired from the laser signal processing unit 240, the probability of faulty detection is reduced by limiting a process range. Here, the distance information acquired from the laser signal processing unit 240 is expressed by $Z_l$. The distance information acquiring unit 1411 transmits the acquired distance information $Z_l$ to the cost $C_l$ calculating unit 1412.

The cost $C_l$ calculating unit 1412 calculates cost $C_l$, based on the distance information $Z_l$ transmitted by the distance information acquiring unit 1411. Cost $C_l$ is a parameter indicative of degree of dissimilarity between the base pixel region p and a pixel region in the comparison image 510 at a position specified by the acquired distance information $Z_l$.

Specifically, first, the cost $C_l$ calculating unit 1412 calculates the shift amount di by Formula 7 below, based on the distance information $Z_l$. In this way, the pixel region in the comparison image 510 at the position specified by the distance information $Z_l$ is extracted.

(Formula 7)

$$d_l = \frac{Bf}{Z_l} \qquad (7)$$

In above Formula 7, B is a baseline-length between the camera lens unit 211 and the camera lens unit 221. f is a focal length of the camera lens unit 211 and the camera lens unit 221.

Next, the cost $C_l$ calculating unit 1412 calculates cost $C_l(p,d_l)$ at the shift amount di. Similarly to the calculation of the cost C(p,d) as described above, the cost $C_l$ calculating unit 1412 calculates the cost $C_l(p,d_l)$ as a degree of dissimilarity between the pixel value of the base pixel region p and the pixel value of the pixel region 511 at the position specified by the shift amount di.

The weight adding unit 1420 adds weight by Formula 8 below, with respect to the adjusted cost C'(p,d), which is adjusted by the cost C adjusting unit 1404, and the cost $C_l(p,d_l)$, which is calculated by the cost $C_l$ calculating unit 1412, in order to calculate weighted cost.

(Formula 8)

$$\hat{C}(p,d) = w_d \left( (1-Q(p))C(p,d) + Q(p)\sum_{k\in D}\frac{C(p,k)}{|D|} \right) + (1-w_d)C_l(p,d_l) \qquad (8)$$

Here, $w_d$ is a weight coefficient indicative of which of the adjusted cost C'(p,d) adjusted by the cost C adjusting unit 1404 or the cost $C_l(p,d_l)$ calculated by the cost $C_l$ calculating unit 1412 has priority. In a case of giving priority to the adjusted cost C'(p,d) adjusted by the cost C adjusting unit 1404, a larger value is set as $w_d$. Contrarily, in a case of giving priority to the cost $C_l(p,d_l)$ calculated by the cost $C_l$ calculating unit 1412, a smaller value is set as $w_d$.

Specifically, in a case where the shift value d is not equal to di, a larger value is set as $w_d$. In this way, in regard to the pixel region 511 in the comparison image 510, the weighted cost with respect to pixel regions where the shift value d is not equal to di can be larger. Note that, in regard to the adjusted cost C'(p,d), which is a larger value in a case of a region with less texture, etc., the value of the weighted cost is even larger with respect to the pixel regions where the shift amount d is not equal to di, because a larger value is set as $w_d$ so as to give priority to the adjusted cost C'(p,d).

Contrarily, in a case where the shift value d is equal to di, a smaller value is set as $w_d$. In this way, in regard to the pixel region 511 in the comparison image 510, the weighted cost with respect the pixel region where the shift value d is equal to di can be smaller. Note that the value of the cost $C_l(p,d_l)$ calculated by the cost Ci calculating unit 1412 is smaller than the value of the adjusted cost C'(p,d) adjusted by the cost C adjusting unit 1404. Therefore, the value of the weighted cost is even smaller with respect to the pixel region where the shift amount d is equal to $d_l$, because a smaller value is set as $w_d$ so as to give priority to the cost $C_l(p,d_l)$ calculated by the cost $C_l$ calculating unit 1412.

That is to say, according to Formula 8 above, difference between costs with respect to the pixel region where the shift amount d is equal to di and the other pixel regions can be made claerer, in a form of weighted cost.

Consequently, when a counterpart pixel region is extracted based on second synthesis cost S' that is calculated by the second synthetic cost calculating unit 722, the pixel region in the comparison image 510 where the shift amount d is equal to di is more easily extracted. In other words, the position 512 of the counterpart pixel region corresponding to the base pixel region p can be extracted with higher accuracy.

Note that, in Formula 8 above, the value of $W_d$ may be a fixed value and may be variable in accordance with the value of the distance information $z_l$. Moreover, there may be a configuration such that the value of $w_d$ is changed in accordance with surrounding environment (e.g., whether it is in the daytime or nighttime).

The weight adding unit 1420 transmits the weighted cost calculated by Formula 8 above to the second synthetic cost calculating unit 722.

(2) Functional configuration of the second synthetic cost calculating unit 722

The second synthetic cost calculating unit 722 calculates second synthesis cost S', as a synthesis result, by performing synthesis with respect to the weighted cost of each pixel region, which is transmitted from the second cost calculating unit 721. The second synthetic cost calculating unit 722 calculates multiple second path costs $L_r$' by use of a processing method such as SGM and then aggregates the second path costs $L_r$' with respect to the base pixel region p, in order to obtain the second synthesis cost S'.

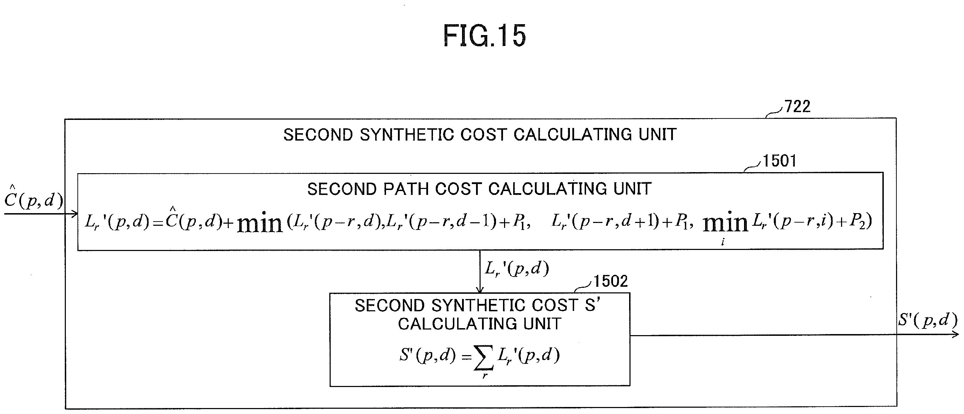

FIG. 15 is a drawing illustrating details of a functional configuration of a second synthetic cost calculating unit. As illustrated in FIG. 15, the second synthetic cost calculating unit 722 includes a second path cost calculating unit 1501 and a second synthetic cost S' calculating unit 1502.

The second path cost calculating unit 1501 obtains the weighted cost from the weight adding unit 1420, and then calculates the second path costs $L_r$' by Formula 9 below.

(Formula 9)

$$L_r'(p,d) = \hat{C}(p,d) + \min \left( L_r'(p-r,d), L_r'(p-r,d-1)+P_1, \quad L_r'(p-r,d+1)+P_1, \min_i L_r'(p-r,i)+P_2 \right)$$

$$(9)$$

Here, Formula 9 above is a general formula for obtaining path costs by use of SGM, where cost C(p,d) is replaced with weighted cost. Additionally, $P_1$ and $P_2$ in Formula 9 above are fixed parameters.

Based on above Formula 9, the second path cost calculating unit 1501 adds, to the weighted cost with respect to the base pixel region p, the smallest value of second path cost $L_r$' with respect to each pixel region in an r-direction, in order to obtain second path cost $L_r$'(p,d) in the r-direction. Note that the second path cost calculating unit 1501 calculates second path cost $L_r$' with respect to each of ro-direction through $r_{315}$-direction, in order to obtain second path costs $L_{r0}$'(p, d) through $L_{r315}$'(p,d).

The second synthetic cost S' calculating unit 1502 calculates second synthesis cost S'(p,d) by use of Formula 10 below, based on the second path costs $L_{r0}$'(p,d) through $L_{r315}$'(p,d) with respect to the eight directions, which are obtained by the second path cost calculating unit 1501.
(Formula 10)

$$S'(p,d) = \sum_r L_r'(p,d) \qquad (10)$$

The second synthetic cost S' calculating unit 1502 transmits the calculated second synthesis cost S'(p,d) to the second parallax calculating unit 723.

(3) Processing performed by the second parallax calculating unit 723

The second parallax calculating unit 723 is an example of a re-calculating unit, which extracts the counterpart pixel region in the comparison image 510 that corresponds to the base pixel region p, based on the second synthesis cost S' calculated by the second synthetic cost calculating unit 722, in order to re-calculate a parallax with respect to the base pixel region p.

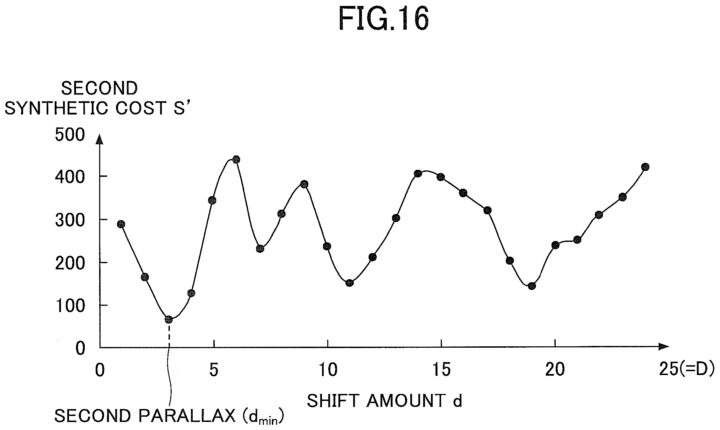

FIG. 16 is a drawing illustrating a calculation result of the second synthesis cost S' with respect to the base pixel region p. The second parallax calculating unit 723 calculates the shift amount $d_{min}$ with which the value of the second synthesis cost S'(p,d) is the smallest in a predetermined range (i.e., 0 through D), in order to extract the counterpart pixel region in the comparison image 510. In this way, the second parallax calculating unit 723 obtains the shift amount $d_{min}$, which indicates a parallax (i.e., a second parallax) between the extracted counterpart pixel region and the base pixel region.
Note that the second parallax calculating unit 723 performs the same processes with respect to other base pixel regions in the base image 520, in order to obtain re-calculation results of parallaxes (i.e., second parallaxes). In this way, the second parallax calculating unit 723 generates a parallax image, and then stores the generated parallax image in the memory 260.

<9. A parallax image generating process performed by the distance calculation processing unit 250>

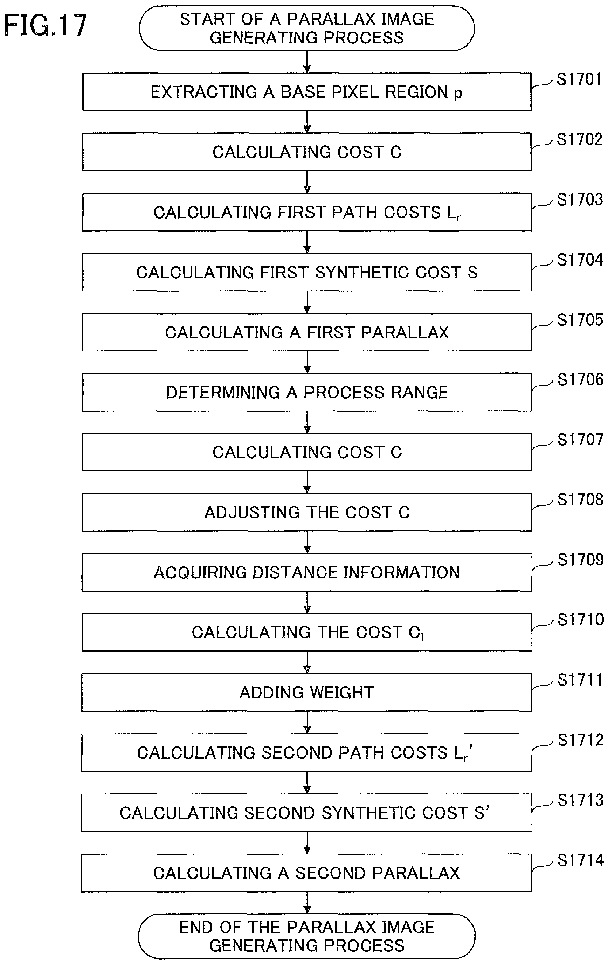

Next, the following description explains a flow of a parallax image generating process performed by the distance calculation processing unit 250. FIG. 17 is a flowchart illustrating a flow of a parallax image generating process performed by a distance calculation processing unit. Note that the flowchart of FIG. 17 illustrates a process for calculating a parallax with respect to a base pixel region p that corresponds to a position irradiated with a laser beam emitted by the laser radar ranging unit 120. That is to say, for generating a parallax image, the distance calculation processing unit 250 similarly performs processes of the flowchart as illustrated in FIG. 17 with respect to each of other base pixel regions.
At Step S1701, the base image acquiring unit 801 acquires a base image 520 to extract a base pixel region p.
At Step S1702, the cost C calculating unit 803 calculates cost C(p,d), based on the pixel value of the base pixel region p and the pixel value of a pixel region 511 at a position with shift amount d in a comparison image 510 acquired by the comparison image acquiring unit 802.
At Step S1703, the first path cost calculating unit 1001 calculates first path costs $L_r$(p,d), based on the cost C(p,d).
At Step S1704, the first synthesis cost S calculating unit 1002 calculates first synthesis cost S(p,d), based on the first path costs $L_r$(p,d).
At Step S1705, the first parallax calculating unit 713 calculates the shift amount with which the value of the first synthesis cost S(p,d) is the smallest. In this way, the first parallax calculating unit 713 extracts a counterpart pixel region from the comparison image 510 and then acquires a calculation result of a parallax (i.e., a first parallax) between the base pixel region p and the extracted counterpart pixel region.
At Step S1706, the range determining unit 714 determines, based on the calculation result of the parallax, a process range for the laser signal processing unit 240 to process a laser light receiving signal. Further, the range determining unit 714 transmits to the laser signal processing unit 240 the determined process range, based on which the laser signal processing unit 240 detects a signal indicative of light reflected by an object to calculate distance information $Z_l$.
At Step S1707, the cost C calculating unit 1403 calculates cost C(p,d), based on the pixel value of the base pixel region p and the pixel value of the pixel region 511 at a position with shift amount d in the comparison image 510 acquired by the comparison image acquiring unit 1402.
At Step S1708, the cost C adjusting unit 1404 adjusts the calculated cost C(p,d), based on reliability Q(p), in order to obtain adjusted cost C'(p,d).

At Step S1709, the distance information acquiring unit 1411 acquires, from the laser signal processing unit 240, the distance information $Z_l$ that is indicative of distance to an object in the real space that corresponds to the position of the base pixel region p.

At Step S1710, the cost $C_l$ calculating unit 1412 calculates the cost $C_l$, based on the distance information $Z_l$ acquired by the distance information acquiring unit 1411.

At Step S1711, the weight adding unit 1420 adds weight with respect to the adjusted cost C'(p,d) adjusted by the cost C adjusting unit 1404 and the calculate cost $C_l(p,d)$ calculated by the cost $C_l$ calculating unit 1412, in order to calculate weighted cost.

At Step S1712, the second path cost calculating unit 1501 calculates second path costs $L_r'(p,d)$, by use of the weighted cost.

At Step S1713, the second synthesis cost S' calculating unit 1502 calculates second synthesis cost S'(p,d), based on the second path costs $L_r'(p,d)$.

At Step S1714, the second parallax calculating unit 723 calculates a shift amount (i.e., the shift amount $d_{min}$) with which the value of the second synthesis cost S'(p,d) is the smallest, in order to extract a counterpart pixel region from the comparison image 510. In this way, the second parallax calculating unit 723 acquires a re-calculation result of a parallax (i.e., a second parallax) between the base pixel region p and the extracted counterpart pixel region.

<10. Conclusion>

As clarified in the above explanation, the parallax calculation system 100 according to the present embodiment performs the following:

- irradiates an object in the real space that corresponds to a position in a base pixel region p with a laser beam, to generate and acquire a laser light receiving signal;
- calculates cost C with respect to the base pixel region p and then performs synthesis with respect to the calculated cost C, in order to calculate first synthesis cost S, based on which a parallax with respect to the base pixel region p is calculated; and
- performs a process on the laser light receiving signal within a process range that is calculated based on the parallax with respect to the base pixel region p, in order to detect a signal indicative of light reflected by an object for calculating a distance to the object.

In this way, according to the present embodiment, reduction of a probability for a laser radar ranging unit provided in a parallax calculation system to faultily detect a noise is enabled, so that accuracy of distance measurement is improved.

Further, the parallax calculation system 100 according to the present embodiment performs the following:

- acquires distance information $Z_l$ calculated by a laser radar ranging unit, which is indicative of a distance to an object in the real space that corresponds to a position of the base pixel region p;
- calculates the cost $C_l$, based on the shift amount di corresponding to the acquired distance information $Z_l$;
- adds weight, by use of a weight coefficient $w_d$, with respect to adjusted cost C', which is adjusted based on reliability of cost C with respect to the base pixel region p, and to the cost $C_l$, which is calculated based on the distance information $Z_l$, in order to calculate weighted cost;
- performs synthesis with respect to the calculated weighted cost, in order to calculate second synthesis cost S'; and
- extracts a counterpart pixel region in the comparison image that corresponds to the base pixel region p, based on the calculated second synthesis cost S', in order to re-calculate a parallax in the base pixel region p.

In such a way, it is possible to calculate weighted cost, whose value with respect to a pixel region in a comparison image that corresponds to a position specified by distance information calculated by a laser radar ranging unit is lower, compared to other pixel regions. Consequently, by use of second synthesis cost that is obtained by performing synthesis with respect to the weighted cost, it is easier to extract the above pixel region as a counterpart pixel region at a time of extracting a counterpart pixel region.

That is to say, according to the parallax calculation system 100 in the present embodiment, accurately extracting a counterpart pixel region and performing parallax calculation with high accuracy are enabled.

(Other Examples)

Although a case of calculating cost C with respect to a pixel region is explained in the above embodiment, there may be a configuration such that calculation of cost C is performed on a pixel basis. In such a case, the first cost calculating unit 711 and the second cost calculating unit 721 extract a base pixel from a base image 520, in order to calculate cost C between the base pixel and each pixel of a comparison image 510. That is to say, a "pixel region" as described in the above embodiment includes one pixel and multiple pixels.

Further, although the stereo camera unit 110 and the laser radar ranging unit 120 are configured to be unified in the above embodiment, the stereo camera unit 110 and the laser radar ranging unit 120 may be configured individually.

Further, in the explanation of the above embodiment, the parallax calculation system 100 includes the three-dimensional sensors (i.e., the stereo camera unit 110 and the laser radar ranging unit 120) and the control-board housing 202. However, the parallax calculation system 100 need not include the three-dimensional sensors; that is, the parallax calculation system 100 should at least include a board for achieving the laser signal processing unit 240 and the distance calculation processing unit 250 in the control-board housing 202.

Further, in the explanation of the above embodiment, the laser signal processing unit 240 and the distance calculation processing unit 250 are configured by special integrated circuits. However, for example, there may be a configuration such that a storage medium storing a program code for software to achieve functions of the laser signal processing unit 240 and the distance calculation processing unit 250 is provided to the parallax calculation system 100. In such a configuration as above, a computer in the parallax calculation system 100 retrieves and executes the program code stored in the storing medium, in order to achieve the functions of the laser signal processing unit 240 and the distance calculation processing unit 250.

Further, in the configuration according to the above embodiment, the parallax calculation system 100 includes the laser radar ranging unit 120 that emits a laser beam, to acquire distance information indicative of a distance to a position irradiated with the laser beam, based on reflected light of the laser beam. However, there may be a configuration such that, instead of a laser radar ranging device, the parallax calculation system 100 includes an electromagnetic distance-measurement device that emits an electromagnetic wave, to acquire distance information indicative of a distance to a position irradiated with the electromagnetic wave, based on a reflected wave of the electromagnetic wave.

Further, although distance information calculated by the laser signal processing unit 240 is input to the distance calculation processing unit 250 to be utilized for re-calculating a parallax in the explanation of the above embodiment, the distance information may be utilized for a use other than re-calculating a parallax.

Further, in the explanation of the above embodiment, the parallax calculation system 100 is mounted on the vehicle 140. However, the parallax calculation system 100 may be mounted not only on the vehicle 140 but on a motorcycle, a bicycle, a wheelchair, a cultivator for a farming purpose, etc. Alternatively, the parallax calculation system 100 may be mounted on a moving body such as a robot. Furthermore, the parallax calculation system 100 may be mounted on an industrial robot, etc., that is fixed in factory automation.

Further, although the stereo camera unit 110 and the laser radar ranging unit 120 are configured to be unified in the above embodiment, the stereo camera unit 110 and the laser radar ranging unit 120 may be configured individually.

Further, in the explanation of the above embodiment, the parallax calculation system 100 includes the three-dimensional sensors (i.e., the stereo camera unit 110 and the laser radar ranging unit 120) and the control-board housing 202. However, the parallax calculation system 100 need not include the three-dimensional sensors; that is, the parallax calculation system 100 should at least include a board for achieving the laser signal processing unit 240 and the distance calculation processing unit 250 in the control-board housing 202.

Further, in the explanation of the above embodiment, the laser signal processing unit 240 and the distance calculation processing unit 250 are configured by special integrated circuits. However, for example, there may be a configuration such that a storage medium storing a program code for software to achieve functions of the laser signal processing unit 240 and the distance calculation processing unit 250 is provided to the parallax calculation system 100. In such a configuration as above, a computer in the parallax calculation system 100 retrieves and executes the program code stored in the storing medium, in order to achieve the functions of the laser signal processing unit 240 and the distance calculation processing unit 250.

Further, although distance information calculated by the laser signal processing unit 240 is input to the distance calculation processing unit 250 to be utilized for re-calculating a parallax in the explanation of the above embodiment, the distance information may be utilized for a use other than re-calculating a parallax.

Further, in the explanation of the above embodiment, the parallax calculation system 100 is mounted on the vehicle 140. However, the parallax calculation system 100 may be mounted not only on the vehicle 140 but on a motorcycle, a bicycle, a wheelchair, a cultivator for a farming purpose, etc. Alternatively, the parallax calculation system 100 may be mounted on a moving body such as a robot. Furthermore, the parallax calculation system 100 may be mounted on an industrial robot, etc., that is fixed in factory automation.

**Claims**

1. A parallax calculation system (100) for calculating a parallax based on images captured by two monocular cameras (111, 112), the parallax calculation system (100) comprising:

a laser radar ranging unit (120),
a distance calculation processing unit (250) including a first parallax calculating unit (713) configured to calculate a first parallax, and a range determining unit (714) configured to determine, based on the calculated first parallax, a range for signal processing to detect a signal that is indicative of a reflected laser light emitted in a view direction of the two monocular cameras (111, 112); and
a laser signal processing unit (240) configured to calculate a distance to a position irradiated with the laser light, the distance being calculated based on the laser light receiving signal detected in the range for signal processing determined by the determining unit (714),
said parallax calculation system (100) being **characterized by**
a second parallax calculating unit (723) configured to re-calculate the parallax calculated based on the captured images, the second parallax being re-calculated by calculating a shift amount with which a value of a synthesis cost is the smallest in a predetermined range, the synthesis cost being calculated based on the distance calculated by the laser signal processing unit (240).

2. The parallax calculation system (100) according to claim 1, wherein the parallax is calculated with respect to a pixel region in one of the captured images, the pixel region corresponding to the position irradiated with the laser light.

3. A moving body comprising the parallax calculation system (100) according to any previous claim.

4. A program for causing a computer to execute processing, the processing comprising:

calculating a first parallax;
determining, based on the calculated first parallax, a range for signal processing to detect a signal that is indicative of a reflected laser light emitted in a view direction of two monocular cameras, wherein the first parallax is calculated based on images captured by the two monocular cameras; and
calculating a distance to a position irradiated with the laser light, the distance being calculated based on the signal detected in the range for signal processing,
the program being **characterized by** the processing further comprising
re-calculating, by a second parallax calculating unit (723), the parallax calculated based on the captured images, the second parallax being re-calculated by calculating a shift amount with which a value of a synthesis cost is the smallest in a predetermined range, the synthesis cost being calculated based on the distance calculated in the calculating step.

**Patentansprüche**

1. Parallaxenberechnungssystem (100) zum Berechnen einer Parallaxe basierend auf Bildern, die von zwei Monokularkameras (111, 112) aufgenommen wurden, wobei das Parallaxenberechnungssystem (100) umfasst:

eine Laserradar-Entfernungsmesseinheit (120),
eine Entfernungsberechnungs-Verarbeitungseinheit (250), die eine erste Parallaxenberechnungseinheit (713) enthält, die konfiguriert ist, um eine erste Parallaxe zu berechnen, und eine Entfernungsbestimmungseinheit (714), die konfiguriert ist, um basierend auf der berechneten ersten Parallaxe einen Bereich für eine Signalverarbeitung zu bestimmen, um ein Signal zu erfassen, das ein reflektiertes Laserlicht anzeigt, das in einer Blickrichtung der zwei Monokularkameras (111, 112) emittiert wird; und
eine Lasersignal-Verarbeitungseinheit (240), die konfiguriert ist, um eine Entfernung zu einer mit dem Laserlicht bestrahlten Position zu berechnen, wobei die Entfernung basierend auf dem Laserlichtempfangssignal berechnet wird, das in dem Bereich für die Signalverarbeitung erfasst wird, der von der Bestimmungseinheit (714) bestimmt wird;
wobei das Parallaxenberechnungssystem (100) **gekennzeichnet ist durch**
eine zweite Parallaxenberechnungseinheit (723), die konfiguriert ist, um die auf der Grundlage der aufgenommenen Bilder berechnete Parallaxe neu zu berechnen, wobei die zweite Parallaxe neu berechnet wird, indem ein Verschiebungsbetrag berechnet wird, mit dem ein Wert der Synthesekosten in einem vorbestimmten Bereich am kleinsten ist, wobei die Synthesekosten basierend auf dem von der Lasersignalverarbeitungseinheit (240) berechneten Abstand berechnet werden.

**2.** Parallaxenberechnungssystem (100) nach Anspruch 1, wobei die Parallaxe in Bezug auf einen Pixelbereich in einem der aufgenommenen Bilder berechnet wird, wobei der Pixelbereich der mit dem Laserlicht bestrahlten Position entspricht.

**3.** Sich bewegender Körper, der das Parallaxenberechnungssystem (100) gemäß einem der vorhergehenden Ansprüche umfasst.

**4.** Programm, das bewirkt, dass ein Computer eine Verarbeitung ausführt, wobei die Verarbeitung umfasst:

Berechnen einer ersten Parallaxe;
Bestimmen, basierend auf der berechneten ersten Parallaxe, eines Bereichs für die Signalverarbeitung zum Erfassen eines Signals, das auf ein reflektiertes Laserlicht hinweist, das in einer Blickrichtung von zwei Monokularkameras emittiert wird, wobei die erste Parallaxe basierend auf Bildern berechnet wird, die von den beiden Monokularkameras aufgenommen wurden; und
Berechnen einer Entfernung zu einer Position, die mit dem Laserlicht bestrahlt wird, wobei die Entfernung basierend auf dem Signal berechnet wird, das in dem Bereich für die Signalverarbeitung erfasst wird,
wobei das Programm **dadurch gekennzeichnet ist, dass** die Verarbeitung ferner umfasst
Neuberechnung der auf den aufgenommenen Bildern basierten, berechneten Parallaxe durch eine zweite Parallaxenberechnungseinheit (723), wobei die zweite Parallaxe durch Berechnung eines Verschiebungsbetrags neu berechnet wird, mit dem ein Wert der Synthesekosten in einem vorbestimmten Bereich am kleinsten ist, wobei die Synthesekosten basierend auf dem im Berechnungsschritt berechneten Abstand berechnet werden.

## Revendications

**1.** Système de calcul de parallaxe (100) pour calculer une parallaxe sur la base d'images capturées par deux caméras monoculaires (111, 112), le système de calcul de parallaxe (100) comprenant :

une unité de télémétrie radar laser (120),
une unité de traitement de calcul de distance (250) comprenant une première unité de calcul de parallaxe (713) configurée pour calculer une première parallaxe, et une unité de détermination de distance (714) configurée pour déterminer, sur la base de la première parallaxe calculée, une plage pour le traitement du signal afin de détecter un signal qui est indicatif d'une lumière laser réfléchie émise dans une direction de vue des deux caméras monoculaires (111, 112) ; et
une unité de traitement de signal laser (240) configurée pour calculer une distance à une position irradiée par la lumière laser, la distance étant calculée sur la base du signal de réception de lumière laser détecté dans la plage de traitement de signal déterminée par l'unité de détermination (714),
ledit système de calcul de parallaxe (100) étant **caractérisé par**
une seconde unité de calcul de parallaxe (723) configurée pour recalculer la parallaxe calculée sur la base des images capturées, la seconde parallaxe étant recalculée en calculant une quantité de décalage avec laquelle une valeur d'un coût de synthèse est le plus petit dans une plage prédéterminée, le coût de synthèse étant calculé sur la base de la distance calculée par l'unité de traitement de signal laser (240).

**2.** Système de calcul de parallaxe (100) selon la revendication 1, dans lequel la parallaxe est calculée par rapport à une région de pixels dans l'une des images capturées, la région de pixels correspondant à la position irradiée par la lumière laser.

**3.** Corps mobile comprenant le système de calcul de parallaxe (100) selon l'une quelconque des revendications précédentes.

**4.** Programme pour amener un ordinateur à exécuter un traitement, le traitement comprenant:

le calcul d'une première parallaxe ;
la détermination, sur la base de la première parallaxe calculée, d'une plage pour le traitement du signal pour détecter un signal qui est indicatif d'une lumière laser réfléchie émise dans une direction de vue de deux caméras monoculaires, dans lequel la première parallaxe est calculée sur la base d'images capturées par les deux caméras monoculaires ; et
le calcul d'une distance à une position irradiée par la lumière laser, la distance étant calculée sur la base du signal détecté dans la plage pour le traitement du signal,

le programme étant **caractérisé par** le traitement comprenant en outre

un recalcul, par une seconde unité de calcul de parallaxe (723), la parallaxe étant calculée sur la base des images capturées, la seconde parallaxe étant recalculée en calculant une valeur de décalage avec laquelle une valeur d'un coût de synthèse est la plus petite dans une plage prédéterminée, le coût de synthèse étant calculé sur la base de la distance calculée à l'étape de calcul.

# FIG.1

FIG.2

FIG.3A

# FIG.3B

FIG.4A

FIG.4B

DISTANCE [m]

300

250

200

150

100

50

0

RESPONSE TIME [sec]

# FIG.5A

PARALLAX

510

y

x x'

511          512

# FIG.5B

520

y

x

530          p

EP 3 279 691 B1

SIGNAL
INTENSITY

611

612

FIG.6A

POSITION OF OBJECT

TIME

SIGNAL
INTENSITY

621

622

FIG.6B

POSITION OF OBJECT

TIME

# FIG.7

COMPARISON IMAGE    BASE IMAGE

LASER SIGNAL PROCESSING UNIT — 240

DISTANCE INFORMATION

PROCESS RANGE

DISTANCE CALCULATION PROCESSING UNIT — 250

PROCESS RANGE CALCULATING UNIT — 710

FIRST COST CALCULATING UNIT — 711

FIRST SYNTHETIC COST CALCULATING UNIT — 712

FIRST PARALLAX CALCULATING UNIT — 713

RANGE DETERMINING UNIT — 714

PARALLAX IMAGE GENERATING UNIT — 720

SECOND COST CALCULATING UNIT — 721

SECOND SYNTHETIC COST CALCULATING UNIT — 722

SECOND PARALLAX CALCULATING UNIT — 723

PARALLAX IMAGE

EP 3 279 691 B1

# FIG.8

BASE
IMAGE

COMPARISON
IMAGE

711

FIRST COST
CALCULATING
UNIT

801

BASE IMAGE
ACQUIRING
UNIT

802

COMPARISON
IMAGE
ACQUIRING
UNIT

803

COST C
CALCULATING
UNIT

$C(p,d)$

$C(p,d)$

FIG.9A

FIG.9B

## FIG.10

**FIRST SYNTHETIC COST CALCULATING UNIT** ⌒712

$C(p,d)$

**FIRST PATH COST CALCULATING UNIT** ⌒1001

$$L_r(p,d) = C(p,d) + \min\left(L_r(p-r,d), L_r(p-r,d-1) + P_1, \quad L_r(p-r,d+1) + P_1, \quad \min_i L_r(p-r,i) + P_2\right)$$

$L_r(p,d)$ ⌒1002

**FIRST SYNTHETIC COST S CALCULATING UNIT**

$$S(p,d) = \sum_r L_r(p,d)$$

$S(p,d)$

# FIG.11

# FIG.12

$d(x_l - \frac{1}{2}a,\ y_l + \frac{1}{2}b)$     $d(x_l + \frac{1}{2}a,\ y_l + \frac{1}{2}b)$

520

POSITION IRRADIATED BY
LASER RADAR RANGING UNIT
$(x_l,\ y_l)$

b

a

$d(x_l - \frac{1}{2}a,\ y_l - \frac{1}{2}b)$     $d(x_l + \frac{1}{2}a,\ y_l - \frac{1}{2}b)$

EP 3 279 691 B1

FIG.13A

FIG.13B

EP 3 279 691 B1

FIG.14

BASE IMAGE → COMPARISON IMAGE → DISTANCE INFORMATION

721

SECOND COST CALCULATING UNIT

1401 — BASE IMAGE ACQUIRING UNIT

1402 — COMPARISON IMAGE ACQUIRING UNIT

1411 — DISTANCE INFORMATION ACQUIRING UNIT

1403 — COST C CALCULATING UNIT

$$C(p,d)$$

$Z_l$

1412 — COST $C_l$ CALCULATING UNIT

$$d_l = \frac{Bf}{Z_l} \longrightarrow C_l(p,d_l)$$

$C(p,d)$

1404 — COST C ADJUSTING UNIT

$$C'(p,d) = \left[ (1-Q(p))C(p,d) + Q(p)\sum_{k \in D} \frac{C(p,k)}{|D|} \right]$$

$C_l$

$C'(p,d)$

1420 — WEIGHT ADDING UNIT

$$\hat{C}(p,d) = w_d \left[ (1-Q(p))C(p,d) + Q(p)\sum_{k \in D} \frac{C(p,k)}{|D|} \right] + (1-w_d)C_l(p,d_l)$$

$\rightarrow \hat{C}(p,d)$

34

# FIG.15

$\hat{C}(p,d)$

**SECOND SYNTHETIC COST CALCULATING UNIT** ⟋722

**SECOND PATH COST CALCULATING UNIT** ⟋1501

$$L_r{'}(p,d) = \hat{C}(p,d) + \min (L_r{'}(p-r,d), L_r{'}(p-r,d-1)+P_1, \quad L_r{'}(p-r,d+1)+P_1, \min_i L_r{'}(p-r,i)+P_2)$$

$L_r{'}(p,d)$

⟋1502

**SECOND SYNTHETIC COST S'**
**CALCULATING UNIT**

$$S{'}(p,d) = \sum_r L_r{'}(p,d)$$

$S{'}(p,d)$

FIG.16

**FIG.17**

START OF A PARALLAX IMAGE
GENERATING PROCESS

EXTRACTING A BASE PIXEL REGION p — S1701

CALCULATING COST C — S1702

CALCULATING FIRST PATH COSTS $L_r$ — S1703

CALCULATING FIRST SYNTHETIC COST S — S1704

CALCULATING A FIRST PARALLAX — S1705

DETERMINING A PROCESS RANGE — S1706

CALCULATING COST C — S1707

ADJUSTING THE COST C — S1708

ACQUIRING DISTANCE INFORMATION — S1709

CALCULATING THE COST $C_l$ — S1710

ADDING WEIGHT — S1711

CALCULATING SECOND PATH COSTS $L_r'$ — S1712

CALCULATING SECOND SYNTHETIC COST S' — S1713

CALCULATING A SECOND PARALLAX — S1714

END OF THE PARALLAX IMAGE
GENERATING PROCESS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016011939 A
- WO 2015099193 A1
- WO 2015129907 A1
- EP 2927710 A2
- EP 2911392 A1